# FASCICULE DE BREVET EUROPEEN

(11) **EP 1 747 362 B1**
(45) Date de publication et mention de la délivrance du brevet: **05.12.2018**
(21) Numéro de dépôt: 05771068.3
(22) Date de dépôt: 17.05.2005
(51) Int. Cl.: F01P 7/16

(54) **VANNE DE COMMANDE POUR UN CIRCUIT DE REFROIDISSEMENT DE MOTEUR THERMIQUE, NOTAMMENT DE VEHICULE AUTOMOBILE**
STEUERVENTIL FÜR DEN KÜHLKREISLAUF EINER WÄRMEKRAFTMASCHINE, IM BESONDEREN FÜR EIN KRAFTFAHRZEUG
CONTROL VALVE FOR HEAT ENGINE COOLING CIRCUIT, IN PARTICULAR FOR MOTOR VEHICLE

(30) Priorité: 17.05.2004 FR 0405344
(43) Date de publication de la demande: 31.01.2007
(73) Titulaire: VALEO SYSTEMES THERMIQUES, 78321 Le Mesnil St Denis Cedex (FR)
(72) Inventeur: FARKH, Alain, F-78490 Montfort l'Amaury (FR); VACCA, Frédéric, F-78910 Behoust (FR)
(74) Mandataire: Neuviale, Bertrand
(86) Numéro de dépôt international: PCT/FR2005/001224
(87) Numéro de publication internationale: WO 2005/124119

(56) Documents cités:
- EP-A1- 1 106 802
- DE-A- 10 243 778
- FR-A- 2 827 360
- US-A- 4 976 462
- US-A1- 2001 020 452

## Description

L'invention se rapporte au domaine des circuits de refroidissement des moteurs thermiques, en particulier de véhicules automobiles.

Elle concerne plus particulièrement une vanne de commande pour un circuit de refroidissement d'un moteur thermique, comprenant un corps de vanne avec un orifice axial agencé pour être relié au moteur thermique et au moins deux orifices latéraux agencés pour être reliés à des branches du circuit, et dans laquelle le corps de vanne délimite un logement cylindrique pour un organe de réglage agencé pour être entraîné en rotation par un actionneur et à prendre différentes positions angulaires pour contrôler la distribution du fluide dans les branches du circuit.

On connaît déjà, notamment par la demande de brevet français n° 01 09221, une vanne de commande de ce type qui est destinée à faire partie d'un circuit de refroidissement d'un moteur thermique de véhicule automobile.

Cette vanne connue comprend habituellement trois orifices latéraux prévus pour être reliés respectivement à une première branche du circuit qui contient un radiateur de refroidissement du moteur thermique, une deuxième branche qui constitue une dérivation du radiateur de refroidissement et une troisième branche qui contient un aérotherme pour le chauffage de l'habitacle du véhicule. Le fluide de refroidissement du moteur thermique, qui est habituellement de l'eau additionnée d'un antigel, circule dans le circuit sous l'action d'une pompe de circulation et est réparti entre les trois branches.

La vanne permet d'optimiser et d'améliorer les différentes fonctions du circuit, notamment lors de la montée en température du moteur thermique et lorsqu'un chauffage de l'habitacle est souhaité, et aussi en cas de surchauffe du moteur.

Habituellement, l'orifice axial du corps de vanne constitue un orifice d'entrée qui est relié à une sortie du moteur. Autrement dit, le fluide de refroidissement, qui provient du moteur, accède à la vanne et est ensuite réparti entre les trois branches au travers des orifices latéraux qui constituent en ce cas des orifices de sortie.

Cependant, dans une autre forme de réalisation, il est possible d'utiliser l'orifice axial comme orifice de sortie. Dans ce cas, les trois branches alimentent respectivement les trois orifices latéraux qui constituent des orifices d'entrée et le fluide quitte ensuite la vanne pour parvenir à l'entrée du moteur.

Dans la solution connue décrite précédemment, le raccordement des différents orifices de la vanne, à savoir l'orifice axial et les orifices latéraux, avec le moteur et les branches du circuit s'effectue au travers de canalisations, généralement des canalisations souples, qui génèrent de l'encombrement et peuvent constituer en outre une source de fuites.

Jusqu'à présent, aucune solution n'a été envisagée pour optimiser l'implantation de la vanne de commande par rapport au moteur thermique. Ainsi, la liaison entre la vanne de commande et l'entrée ou la sortie du moteur s'effectue par une canalisation souple et le montage de la vanne s'effectue par une bride convenablement disposée dans le compartiment moteur.

L'invention vise essentiellement à simplifier le montage de la vanne de commande et le raccordement des différents orifices (ou "voies") de la vanne, notamment pour limiter l'encombrement.

L'invention part de la constatation que la vanne de commande connue possède son propre corps de vanne et que la liaison de fluide du corps de vanne au moteur thermique s'effectue via un collecteur de fluide qui fait partie du moteur et qui possède son propre corps ou boîtier.

En effet, le moteur comporte habituellement deux collecteurs de fluide, l'un pour l'admission du fluide de refroidissement à l'entrée du moteur, et l'autre pour l'évacuation du fluide de refroidissement à la sortie du moteur.

Ces deux collecteurs de fluide peuvent être appelés aussi boîtier d'entrée et boîtier de sortie.

Selon une caractéristique essentielle de l'invention, le corps de vanne est agencé pour être monté sur un collecteur de fluide qui fait partie du moteur thermique de manière à établir une communication directe de fluide entre l'orifice axial de la vanne et ledit collecteur de fluide pour la circulation du fluide de refroidissement.

Autrement dit, le corps de vanne est monté directement sur le corps de fluide, voire intégré à celui-ci, ce qui permet de supprimer au moins une canalisation, c'est-à-dire la canalisation utilisée jusqu'à présent pour relier l'orifice axial de la vanne au moteur, donc à l'un des collecteurs de fluide du moteur.

En outre, le fait de monter directement le corps de vanne sur le collecteur de fluide permet de supprimer une bride de fixation.

Il en résulte une simplification du montage de la vanne, une diminution de l'encombrement, et une diminution de risque possible de fuite en cas de défaillance d'une canalisation.

Dans un premier mode de réalisation de l'invention, le collecteur de fluide est un collecteur d'entrée agencé pour l'admission du fluide de refroidissement dans le moteur thermique, tandis que l'orifice axial de la vanne est un orifice de sortie par lequel s'échappe le fluide de refroidissement pour aller vers le moteur thermique et que les orifices latéraux de la vanne constituent des orifices d'entrée reliés respectivement aux branches du circuit.

Dans une premier forme de réalisation de l'invention, le corps de vanne comporte une paroi cylindrique externe agencée pour être reçue de façon étanche dans un logement cylindrique du collecteur de fluide dans lequel débouchent une ouverture axiale et au moins deux ouvertures latérales aptes à venir en correspondance avec respectivement l'orifice axial et les orifices latéraux du corps de vanne.

Cette solution permet d'intégrer le corps de vanne dans un logement du collecteur de fluide et de diminuer encore l'encombrement par rapport à la forme de réalisation précédente.

Dans cette premier forme de réalisation de l'invention, il est avantageux que l'actionneur de la vanne soit espacé du corps de vanne et que le collecteur de fluide comprenne un deuxième logement espacé du premier logement et agencé pour recevoir l'actionneur. Ainsi, l'actionneur de la vanne est lui aussi reçu dans un deuxième logement du collecteur de fluide. Il est possible ainsi d'utiliser ce fluide pour refroidir l'actionneur de la vanne par convection thermique. L'actionneur, qui est habituellement un moteur électrique, doit être alors logé dans un boîtier étanche pour son refroidissement par le fluide, habituellement de l'eau.

Dans une deuxième forme de réalisation de l'invention, le corps de vanne est formé directement par le corps de fluide, lequel présente un logement cylindrique agencé pour recevoir l'organe de réglage de la vanne. C'est donc le collecteur de fluide lui-même qui constitue le corps de vanne.

Dans cette deuxième forme de réalisation de l'invention, il est avantageux que l'actionneur de la vanne soit espacé de l'organe de réglage de la vanne et que le collecteur de fluide comprenne un deuxième logement espacé du premier logement et agencé pour recevoir l'actionneur. Cette solution offre aussi l'avantage de pouvoir utiliser le fluide pour le refroidissement de l'actionneur.
De manière préférentielle, le corps de vanne comporte trois orifices latéraux agencés pour être reliés respectivement à une première branche qui constitue un radiateur de refroidissement du moteur thermique, à une deuxième branche qui constitue une dérivation du radiateur de refroidissement et à une troisième branche qui contient un aérotherme pour le chauffage d'un habitacle.
Selon une autre caractéristique de l'invention, le corps de vanne comporte une première face d'extrémité dans laquelle est aménagé l'orifice axial et une deuxième face d'extrémité qui est ouverte et obturée par un couvercle. Il est avantageux que ce couvercle comporte un prolongement qui supporte l'actionneur.
Sous un autre aspect, l'invention concerne un moteur thermique, en particulier de véhicule automobile, comprenant un collecteur de fluide pour un fluide de refroidissement, ce collecteur de fluide étant équipé d'une vanne de commande telle que définie précédemment.

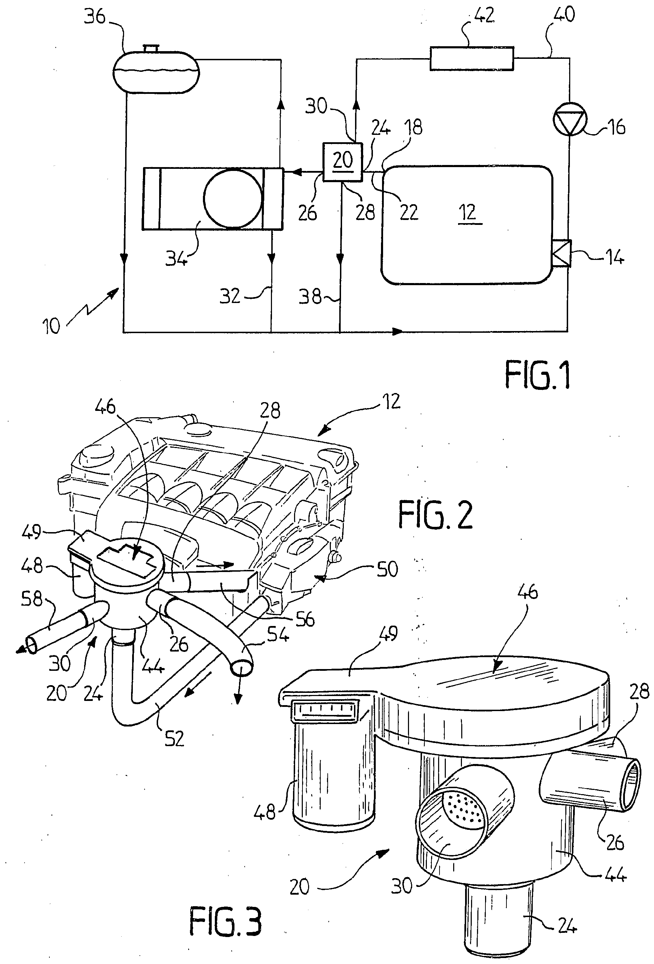

Dans la description qui suit, faite à titre d'exemple, on se réfère aux dessins annexés, sur lesquels :
- la figure 1 représente un schéma de circuit de refroidissement d'un moteur thermique de véhicule automobile équipé d'une vanne de commande selon l'art antérieur ;
- la figure 2 est une vue en perspective partielle d'un moteur et de son circuit de refroidissement comportant une vanne de commande selon l'art antérieur ;
- la figure 3 est une vue en perspective, à échelle agrandie, de la vanne de commande de l'art antérieur de la figure 2 ;
- la figure 4 est une vue en perspective d'un moteur dont un collecteur de fluide est équipé d'une vanne de commande;
- la figure 5 est une vue en perspective éclatée montrant la vanne de commande et le collecteur de fluide avant assemblage;
- la figure 6 est une vue de côté montrant le collecteur de fluide et la vanne de commande de la figure 5 après assemblage ;
- la figure 7 est une vue en perspective éclatée d'un moteur thermique dont un collecteur de fluide est équipé d'une vanne de commande dans une premier forme de réalisation de l'invention ;
- la figure 8 est une vue en perspective éclatée montrant le collecteur de fluide et la vanne de commande de la figure 7 avant assemblage ;
- la figure 9 est une vue de côté de la vanne de commande des figures 7 et 8 ;
- la figure 10 est une vue en perspective d'un moteur dont un collecteur de fluide est équipé d'une vanne de commande selon une deuxième forme de réalisation de l'invention ;
- la figure 11 est une vue perspective, à échelle agrandie, du collecteur de fluide et de la vanne de commande de la figure 10 ; et
- la figure 12 est une vue de côté de la vanne de commande des figures 10 et 11.
On se réfère d'abord à la figure 1 qui représente un circuit 10 pour le refroidissement d'un moteur thermique 12 de véhicule automobile. Le circuit 10 est parcouru par un fluide de refroidissement, généralement de l'eau additionnée d'un antigel tel qu'un glycol, qui circule sous l'action d'une pompe mécanique 14 entraînée par le moteur 12, et éventuellement avec l'aide d'une pompe électrique 16. Le fluide de refroidissement pénètre ainsi dans le moteur, est échauffée dans le moteur et quitte ce dernier par une sortie 18 qui est reliée à une vanne de commande 20 au travers d'une canalisation 22. Cette dernière est reliée à une tubulure d'entrée 24 de la vanne de commande 20 qui constitue ainsi une voie d'entrée.
La vanne de commande 20 comporte trois tubulures de sortie 26, 28 et 30, encore appelées voies de sortie.

La tubulure 26 est reliée à une première branche 32 du circuit qui contient un radiateur de refroidissement 34 du moteur 12 et un vase d'expansion 36.

La tubulure de sortie 28 est reliée à une deuxième branche 38 du circuit qui constitue une dérivation du radiateur de refroidissement 34.

La tubulure 30 est reliée à une troisième branche 40 du circuit qui contient un aérotherme 42 pour le chauffage de l'habitacle du véhicule. La pompe électrique 16 est intercalée sur la branche 40 qui contient l'aérotherme 42.

Comme on peut le voir sur la figure 2, à laquelle on se réfère maintenant, la vanne de commande 20 comprend un corps de vanne 44 de forme générale cylindrique dont une première extrémité axiale se prolonge par la tubulure d'entrée 24 et dont l'autre extrémité axiale est fermée par un couvercle 46 formant embase qui supporte aussi un actionneur 48 comportant, par exemple, un moteur électrique. Il peut s'agir, notamment, d'un moteur pas à pas, ou bien d'un moteur électrique, par exemple sans balais, muni d'un réducteur. L'actionneur 48 est destiné à commander la position angulaire d'un organe de réglage de type rotatif (non représenté), disposé dans le corps de vanne et agencé pour répartir la distribution du fluide de refroidissement entre les tubulures de sortie 26, 28 et 30 qui sont raccordées respectivement aux trois branches du circuit. L'actionneur 48 est supporté par un prolongement 49 du couvercle 26.

Les tubulures 26, 28 et 30 sont des tubulures radiales placées en des positions angulaires choisies par rapport au corps de vanne. Sur la figure 2, on voit que le moteur 12 est muni d'un collecteur de fluide 50 (dans l'exemple un collecteur de sortie), qui est relié par une canalisation 52 à la tubulure d'entrée 24 de la vanne. On voit également que les tubulures de sortie 26, 28 et 30 sont reliées à des canalisations respectives 54, 56 et 58.

Le collecteur de fluide 50 constitue un élément du moteur destiné à collecter le fluide de refroidissement, dans l'exemple, à la sortie du moteur. Le moteur est muni d'un autre collecteur de fluide, dans l'exemple, à l'entrée du moteur (non représenté sur le dessin).
Dans cette solution connue, la vanne de commande 20 est située à distance du moteur et est supportée par des moyens de fixation (non représentés), habituellement par une bride, dans un endroit approprié du compartiment moteur. En outre, la tubulure d'entrée 24 est reliée au collecteur de fluide 50 par la canalisation 52. Cette solution connue complique le montage de la vanne et génère de l'encombrement.

La figure 3 montre la vanne de commande 20 elle-même, sans les canalisations 52, 54, 56 et 58 précitées.

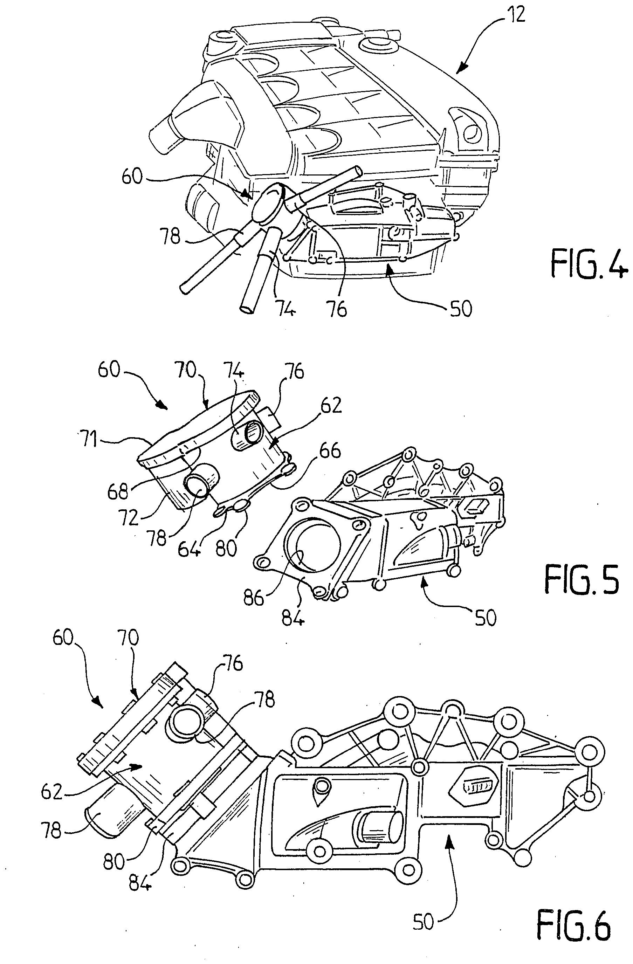

On se réfère maintenant aux figures 4 à 6 pour décrire une vanne de commande qui, ne fait pas partie de l'invention.
La vanne de commande 60 des figures 4 à 6 comprend un corps de vanne 62 de forme générale cylindrique ayant une première face d'extrémité 64 qui délimite un orifice axial 66 et une autre face d'extrémité 68, qui est ouverte, et fermée par un couvercle 70 (voir en particulier la figure 5). Ce couvercle 70 comporte un prolongement qui supporte un actionneur 72 destiné à entraîner en rotation l'organe de réglage (non représenté) de la vanne. Le corps de vanne 62 est muni de trois orifices latéraux 74, 76 et 78 destinés à être reliés respectivement aux trois branches 32, 38, 40 d'un circuit tel que représenté sur la figure 1.
On voit que l'actionneur 72, qui comporte par un exemple un moteur du type pas à pas, est situé espacé du corps de vanne. L'axe (non représenté) du moteur est parallèle à l'axe (non représenté) de l'organe de réglage de la vanne, l'actionneur étant relié à l'organe de réglage par des moyens de transmission appropriés (non représentés).

Le corps de vanne 62 comporte une bride de fixation 80 qui entoure l'orifice axial 66 et qui est agencée pour être solidarisée avec une embase 84 de forme conjuguée que comporte le collecteur de fluide 50 et qui entoure un orifice d'accès 86 que présente le collecteur de fluide. On voit sur la figure 5 le collecteur de fluide 50 et la vanne de commande 60 avant assemblage.
Dans l'exemple représenté, la bride 80 et l'embase 84 comportent chacun quatre oreilles de fixation disposées au sommet d'un carré pour permettre l'assemblage par des moyens de fixation appropriés, par exemple par des vis ou analogues (non représentés). Cependant, d'autres types de fixations sont envisageables, par exemple trois fixations disposées à 120° les unes des autres.

Une fois ces deux éléments assemblés (figure 6), le corps de vanne 62 est solidarisé directement sur le collecteur de fluide 50 ce qui facilite le montage de la vanne et diminue l'encombrement général en limitant également les risques de fuites.
Des moyens d'interface sont insérés entre les orifices latéraux (74, 76, 78) et les canalisations (54, 56, 58). Ces moyens peuvent se composer, par exemple, de brides de fixation.

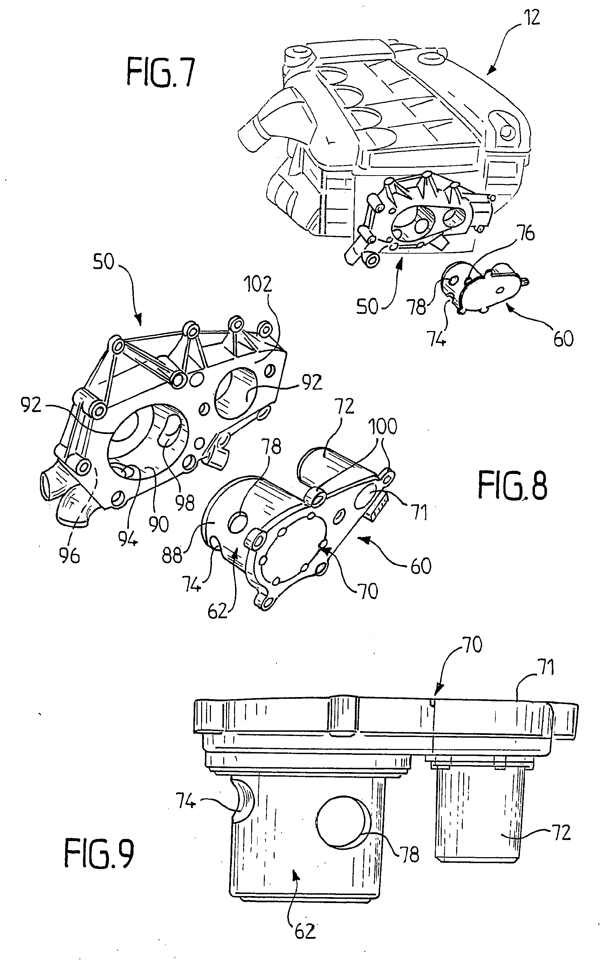

Dans la forme de réalisation des figures 7 et 8, la vanne de commande 60 comporte également un corps de vanne 62 et un actionneur 72 supportés par un couvercle commun 70. Cependant, le corps de vanne 62 présente une paroi cylindrique externe 88 dans laquelle débouchent les orifices latéraux 74, 76 et 78 analogues à ceux décrits en liaison avec les figures 4 à 6. Le collecteur de fluide 50 délimite un premier logement cylindrique 90 agencé pour recevoir de façon étanche la paroi cylindrique 82 du corps de vanne et un deuxième logement cylindrique 91 espacé du premier logement 90 et agencé pour recevoir l'actionneur 72. Cette solution offre en outre l'avantage de pouvoir utiliser le fluide pour refroidir l'actionneur par convection thermique.

Dans le logement cylindrique 90 débouchent une ouverture axiale 92 et trois ouvertures latérales 94, 96 et 98 aptes à venir en correspondance avec respectivement l'orifice axial 66 et les orifices latéraux 74, 76 et 78 du corps de vanne. On remarque que le couvercle 60 est muni de plusieurs oreilles 100 pour permettre la fixation du couvercle sur une face plane 102 du collecteur de fluide 50.

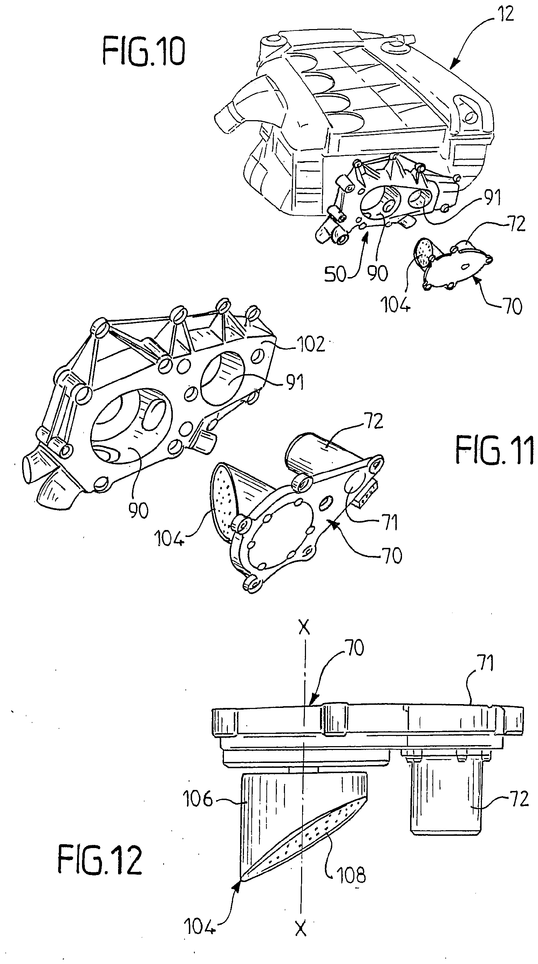

Dans la forme de réalisation des figures 10 à 12, auxquelles on se réfère maintenant, le collecteur de fluide 50 est sensiblement analogue à celui représenté aux figures 7 et 8. Il délimite également deux logements cylindriques 90 et 91 espacés l'un de l'autre et débouchant dans une face 102 servant au montage d'un couvercle 70.

Toutefois, à la différence de la forme de réalisation précédente, le couvercle 70 supporte directement un organe de réglage 104 de la vanne qui vient coopérer à étanchéité avec le logement cylindrique 90. Autrement dit, le corps de vanne est ici formé directement par le collecteur de fluide 50. Le couvercle 70 est muni de plusieurs oreilles pour permettre sa fixation sur la face plane 102 du collecteur de fluide 50.
On remarque sur les figures 11 et 12 que l'organe de réglage 104 de la vanne comporte un corps cylindrique 106 propre à être entraîné en rotation autour d'un axe X-X et que ce corps 106 possède une extrémité tronquée 108 délimitée par un plan qui coupe l'axe X-X dans une direction non perpendiculaire. Là aussi, l'actionneur 72 peut être refroidi par le fluide.

Dans le mode de réalisation des figures 4 à 6 et dans celui des figures 7 à 9, l'organe de réglage de la vanne (non représenté dans ces figures) peut être identique ou non à l'organe de réglage 104 des figures 10 à 12.

Dans les formes de réalisation décrites précédemment, la vanne de commande 50 est montée sur un collecteur de fluide 50 qui est prévu à la sortie du moteur.

Il est concevable aussi de monter la vanne de commande sur un collecteur de fluide prévu à l'entrée du moteur. Cela signifie dans ce cas que les orifices latéraux de la vanne de commande constituent des voies d'entrée reliées respectivement aux trois branches du circuit et que l'orifice axial de la vanne constitue une voie de sortie qui communique directement avec le collecteur de fluide placé à l'entrée du moteur.

L'invention trouve une application particulière au refroidissement des moteurs thermiques de véhicule automobile.

## Revendications

1. Collecteur de fluide (50) pour un fluide de refroidissement destiné à équiper un moteur thermique, en particulier de véhicule automobile, ledit collecteur comprenant un corps, **caractérisé en ce que** ledit collecteur comporte en outre une vanne de commande pour un circuit de refroidissement d'un moteur thermique, comprenant un corps de vanne (62) avec un orifice axial (66) agencé pour être relié au moteur thermique (12) et au moins deux orifices latéraux (74, 76, 78) agencés pour être reliés à des branches (32, 38, 40) du circuit, et dans laquelle le corps de vanne (62) délimite un logement cylindrique pour un organe de réglage (104) agencé pour être entraîné en rotation par un actionneur (72) et à prendre différentes positions angulaires pour contrôler la distribution du fluide de refroidissement dans les branches du circuit, et **en ce que** le corps de vanne (62) est monté sur ledit corps dudit collecteur de fluide (50) de manière à établir une communication directe de fluide entre l'orifice axial (66) de la vanne et ledit corps dudit collecteur de fluide pour la circulation du fluide de refroidissement, **en ce que** le corps de vanne (62) comporte une paroi cylindrique externe (88) agencée pour être reçue de façon étanche dans un logement cylindrique (90) du collecteur de fluide (50) dans lequel débouchent une ouverture axiale (92) et au moins deux ouvertures latérales (94, 96, 98) aptes à venir en correspondance avec respectivement l'orifice axial (66) et les orifices latéraux (74, 76, 78) du corps de vanne et **en ce que** l'actionneur (72) de la vanne est espacé du corps de vanne (62), et **en ce que** le collecteur de fluide (50) comprend un deuxième logement (91) espacé du premier logement (90) et agencé pour recevoir l'actionneur (72).

2. Collecteur selon la revendication 1, **caractérisé en ce que** le collecteur de fluide (50) est un collecteur de sortie agencé pour l'évacuation du fluide de refroidissement provenant du moteur thermique, tandis que l'orifice axial (66) de la vanne est un orifice d'entrée par lequel pénètre le fluide de refroidissement provenant du moteur thermique et que les orifices latéraux (74, 76, 78) de la vanne constituent des orifices de sortie reliés respectivement aux branches du circuit.

3. Collecteur selon la revendication 1, **caractérisé en ce que** le collecteur de fluide (50) est un collecteur d'entrée agencé pour l'admission du fluide de refroidissement dans le moteur thermique, tandis que l'orifice axial (66) de la vanne est un orifice de sortie par lequel s'échappe le fluide de refroidissement pour aller vers le moteur thermique et que les orifices latéraux (74, 76, 78) de la vanne constituent des orifices d'entrée reliés respectivement aux branches du circuit.

4. Collecteur selon l'une des revendications 1 à 3, **caractérisé en ce que** le corps de vanne (62) est formé directement par le collecteur de fluide (50), lequel présente un logement cylindrique (90) agencé pour recevoir l'organe de réglage (104) de la vanne.

5. Collecteur selon la revendication 4, **caractérisé en ce que** l'actionneur (72) de la vanne est espacé de l'organe de réglage (104) de la vanne et **en ce que** le collecteur de fluide (50) comprend un deuxième logement (91) espacé du premier logement (90) et agencé pour recevoir l'actionneur (72) .

6. Collecteur selon l'une des revendications précédentes, **caractérisé en ce qu'**un couvercle (60, 70) dudit corps de vanne est muni de plusieurs oreilles pour permettre la fixation dudit couvercle (60, 70) sur une face plane (102) du collecteur de fluide (50).

7. Collecteur selon l'une des revendications 1 à 6, **caractérisé en ce que** le corps de vanne (62) comporte trois orifices latéraux (74, 76, 78) agencés pour être reliés respectivement à une première branche (30) qui contient un radiateur de refroidissement (34) du moteur thermique, et à une deuxième branche (38) qui constitue une dérivation du radiateur de refroidissement et à une troisième branche (40) qui contient un aérotherme (42) pour le chauffage d'un habitacle.

8. Collecteur selon l'une des revendications 1 à 7, **caractérisée en ce que** le corps de vanne (62) comporte une première face d'extrémité (64) dans laquelle est aménagé l'orifice axial (66) et une deuxième face d'extrémité (68) qui est ouverte et obturée par un couvercle (70) et **en ce que** ce couvercle comporte un prolongement (71) supportant l'actionneur (72).

9. Moteur thermique, en particulier de véhicule automobile, comprenant un collecteur de fluide (50) pour un fluide de refroidissement selon une de revendications 1 à 7.

## Patentansprüche

1. Fluidsammler (50) für ein Kühlfluid, welcher dafür vorgesehen ist, einen Verbrennungsmotor, insbesondere eines Kraftfahrzeugs, auszurüsten, wobei der Sammler einen Körper aufweist,
**dadurch gekennzeichnet, dass** der Sammler außerdem ein Steuerventil für einen Kühlkreislauf eines Verbrennungsmotors umfasst, welches einen Ventilkörper (62) aufweist mit einer axialen Öffnung (66), welche dafür eingerichtet ist, um mit einem Verbrennungsmotor (12) verbunden zu sein, und mindestens zwei seitlichen Öffnungen (74, 76, 78), welche dafür eingerichtet sind, um mit Zweigen (32, 38, 40) des Kreislaufs verbunden zu sein, und bei welchem der Ventilkörper (62) eine zylindrische Aufnahme für eine Einstellvorrichtung (104) abgrenzt, welche dafür eingerichtet ist, um von einem Stellglied (72) in Drehung versetzt zu werden und um verschiedene Drehstellungen einzunehmen, um die Verteilung des Kühlfluids in den Zweigen des Kreislaufs zu steuern, und
dass der Ventilkörper (62) an dem Körper des Fluidsammlers (50) montiert ist, um eine direkte Fluidverbindung zwischen der axialen Öffnung (66) des Ventils und des Körpers des Fluidsammlers für die Zirkulation des Kühlfluids herzustellen,
dass der Ventilkörper (62) eine äußere, zylindrische Wand (88) umfasst, welche dafür eingerichtet ist, um in abdichtender Weise in einer zylindrischen Aufnahme (90) des Fluidsammlers (50) aufgenommen zu werden, in welcher eine axiale Öffnung (92) und mindestens zwei seitliche Öffnungen (94, 96, 98) münden, welche geeignet sind, um mit jeweils der axialen Öffnung (66) und den seitlichen Öffnungen (74, 76, 78) des Ventilkörpers in Verbindung zu treten, und dass das Stellglied (72) des Ventils von dem Ventilkörper (62) beabstandet ist, und
dass der Fluidsammler (50) eine zweite Aufnahme (91) aufweist, welche von der ersten Aufnahme (90) beabstandet und dafür eingerichtet ist, um das Stellglied (72) aufzunehmen.

2. Sammler nach Anspruch 1, **dadurch gekennzeichnet, dass** der Fluidsammler (50) ein Ausgangssammler ist, welcher für das Abfließen des von dem Verbrennungsmotor stammenden Kühlfluids eingerichtet ist, während die axiale Öffnung (66) des Ventils eine Eingangsöffnung ist, durch welche das von dem Verbrennungsmotor stammende Kühlfluid eindringt, und dass die seitlichen Öffnungen (74, 76, 78) des Ventils Ausgangsöffnungen bilden, welche jeweils mit Zweigen des Kreislaufs verbunden sind.

3. Sammler nach Anspruch 1, **dadurch gekennzeichnet, dass** der Fluidsammler (50) ein Eingangssammler ist, welcher für den Einlass des Kühlfluids in den Verbrennungsmotor eingerichtet ist, während die axiale Öffnung (66) des Ventils eine Ausgangsöffnung ist, durch welche das Kühlfluid entweicht, um in Richtung des Verbrennungsmotors zu wandern, und dass die seitlichen Öffnungen (74, 76, 78) des Ventils Eingangsöffnungen bilden, welche jeweils mit Zweigen des Kreislaufs verbunden sind.

4. Sammler nach einem der Ansprüche 1 bis 3, **dadurch gekennzeichnet, dass** der Ventilkörper (62) direkt durch den Fluidsammler (50) ausgebildet ist, welcher eine zylindrische Aufnahme (90) aufweist, welche dafür eingerichtet ist, um die Einstellvorrichtung (104) des Ventils aufzunehmen.

5. Sammler nach Anspruch 4, **dadurch gekennzeichnet, dass** das Stellglied (72) des Ventils von der Einstellvorrichtung (104) des Ventils beabstandet ist, und dass der Fluidsammler (50) eine zweite Aufnahme (91) aufweist, welche von der ersten Aufnahme (90) beabstandet und dafür eingerichtet ist, um das Stellglied (72) aufzunehmen.

6. Sammler nach einem der vorhergehenden Ansprüche, **dadurch gekennzeichnet, dass** ein Deckel (60, 70) des Ventilkörpers mit mehreren Lappen versehen ist, um die Befestigung des Deckels (60, 70) an einer ebenen Fläche (102) des Fluidsammlers (50) zu ermöglichen.

7. Sammler nach einem der Ansprüche 1 bis 6, **dadurch gekennzeichnet, dass** der Ventilkörper (62) drei seitliche Öffnungen (74, 76, 78) umfasst, welche dafür eingerichtet sind, um jeweils mit einem ersten Zweig (30), welcher einen Kühlradiator (34) des Verbrennungsmotors enthält, einem zweiten Zweig (38), welcher eine Umgehung des Kühlradiators bildet, und einem dritten Zweig (40) verbunden zu sein, welcher einen Lufterhitzer (42) für die Beheizung eines Fahrgastraums enthält.

8. Sammler nach einem der Ansprüche 1 bis 7, **dadurch gekennzeichnet, dass** der Ventilkörper (62) eine erste Endfläche (64), in welcher die axiale Öffnung (66) eingebracht ist, und eine zweite Endfläche (68) umfasst, welche offen ist und von einem Deckel (70) verschlossen ist, und dass dieser Deckel eine Verlängerung (71) umfasst, welche das Stellglied (72) trägt.

9. Verbrennungsmotor, insbesondere eines Kraftfahrzeugs, welcher einen Fluidsammler (50) für ein Kühlfluid nach einem der Ansprüche 1 bis 7 aufweist.

## Claims

1. Fluid collector (50) for a cooling fluid intended to equip a combustion engine, particularly of a motor vehicle, the said collector comprising a body, **characterized in that** the said collector further comprises a control valve for a combustion engine cooling circuit, comprising a valve body (62) with an axial port (66) designed to be connected to the combustion engine (12) and at least two lateral ports (74, 76, 78) designed to be connected to branches (32, 38, 40) of the circuit, and in which the valve body (62) delimits a cylindrical housing for a regulating member (104) designed to be turned by an actuator (72) and to adopt various angular positions for controlling the distribution of the cooling fluid in the branches of the circuit, and **in that** the valve body (62) is mounted on the said body of the said fluid collector (50) in such a way as to establish direct fluidic communication between the axial port (66) of the valve and the said body of the said fluid collector for the circulation of the cooling fluid, **in that** the valve body (62) comprises an external cylindrical wall (88) designed to be housed in a sealed manner in a cylindrical housing (90) of the fluid collector (50) into which housing there open an axial opening (92) and at least two lateral openings (94, 96, 98) able to come into register respectively with the axial port (66) and the lateral ports (74, 76, 78) of the valve body and **in that** the actuator (72) of the valve is spaced away from the valve body (62), and **in that** the fluid collector (50) comprises a second housing (91) spaced away from the first housing (90) and designed to receive the actuator (72).

2. Collector according to Claim 1, **characterized in that** the fluid collector (50) is an outlet collector designed to remove the cooling fluid coming from the combustion engine, whereas the axial port (66) of the valve is an inlet port via which the cooling fluid coming from the combustion engine enters and the lateral ports (74, 76, 78) of the valve constitute outlet ports connected respectively to the branches of the circuit.

3. Collector according to Claim 1, **characterized in that** the fluid collector (50) is an inlet collector designed to admit cooling fluid into the combustion engine, whereas the axial port (66) of the valve is an outlet port via which the cooling fluid leaves in order to travel towards the combustion engine and the lateral ports (74, 76, 78) of the valve constitute inlet ports connected respectively to the branches of the circuit.

4. Collector according to one of Claims 1 to 3, **characterized in that** the valve body (62) is formed directly by the fluid collector (50), which has a cylindrical housing (90) designed to receive the regulating member (104) of the valve.

5. Collector according to Claim 4, **characterized in that** the actuator (72) of the valve is spaced away from the regulating member (104) of the valve and **in that** the fluid collector (50) comprises a second housing (91) spaced away from the first housing (90) and designed to receive the actuator (72).

6. Collector according to one of the preceding claims, **characterized in that** a cover (60, 70) of the said valve body is provided with several lugs to allow the said cover (60, 70) to be fixed to a planar face (102) of the fluid collector (50).

7. Collector according to one of Claims 1 to 6, **characterized in that** the valve body (62) comprises three lateral ports (74, 76, 78) designed to be connected respectively to a first branch (30) which contains a radiator (34) for cooling the combustion engine, and to a second branch (38) which constitutes a bypass bypassing the cooling radiator, and to a third branch (40) which contains a unit heater (42) for heating a vehicle interior.

8. Collector according to one of Claims 1 to 7, **characterized in that** the valve body (62) comprises a first end face (64) in which the axial port (66) is formed and a second end face (68) which is open and blanked off by a cover (70) and **in that** this cover comprises an extension (71) supporting the actuator (72).

9. Combustion engine, particularly for a motor vehicle, comprising a fluid collector (50) for a cooling fluid according to one of Claims 1 to 7.
